(19) Europäisches Patentamt

European Patent Office

Office européen des brevets

(11) **EP 0 772 569 B1**

(12) **FASCICULE DE BREVET EUROPEEN**

(45) Date de publication et mention
de la délivrance du brevet:
**12.01.2000 Bulletin 2000/02**

(51) Int. Cl.⁷: **C01B 17/04**, B01J 32/00

(21) Numéro de dépôt: **96918725.1**

(22) Date de dépôt: **28.05.1996**

(86) Numéro de dépôt international:
**PCT/FR96/00799**

(87) Numéro de publication internationale:
**WO 96/38378 (05.12.1996 Gazette 1996/53)**

(54) **PROCEDE DE DESULFURATION CATALYTIQUE D'UN GAZ RENFERMANT LES COMPOSES H2S ET SO2**

KATALYTISCHES VERFAHREN ZUR ENTSCHWEFELUNG EINES H2S UND SO2 ENTHALTENDEN GASES

CATALYTIC DESULPHURIZATION PROCESS FOR A GAS CONTAINING H2S AND SO2

(84) Etats contractants désignés:
**AT BE CH DE DK ES FR GB GR IE IT LI LU MC NL PT SE**

(30) Priorité: **30.05.1995 FR 9506331**

(43) Date de publication de la demande:
**14.05.1997 Bulletin 1997/20**

(73) Titulaire:
**ELF AQUITAINE PRODUCTION**
**92400 Courbevoie (FR)**

(72) Inventeurs:
• **NOUGAYREDE, Jean**
**F-64000 Pau (FR)**

• **PHILIPPE, André**
**F-64300 Orthez (FR)**

(74) Mandataire: **Boillot, Marc**
**Elf Exploration Production**
**Département Propriété Industrielle**
**Tour Elf**
**EP/T/RD/DPI - Bureau 34 G 47**
**92078 Paris La Défense Cedex (FR)**

(56) Documents cités:
**EP-A- 0 218 302**       **EP-A- 0 422 999**
**WO-A-91/12201**        **DD-A- 129 037**
**US-A- 4 054 642**

**Description**

L'invention concerne un procédé de désulfuration catalytique d'un gaz renfermant les composés soufrés $H_2S$ et $SO_2$ et éventuellement COS et/ou $CS_2$, avec récupération desdits composés sous la forme de soufre.

On sait que $H_2S$ réagit avec $SO_2$ en présence de catalyseurs, par exemple à base d'un ou plusieurs oxydes métalliques tels que l'alumine ou l'oxyde de titane, pour former du soufre selon la réaction de CLAUS, qui s'écrit:

$$2\,H_2S + SO_2 \rightleftharpoons \tfrac{3}{x}\,S_x + 2H_2O$$

De nombreux procédés de désulfuration de gaz renfermant $H_2S$ et $SO_2$ mettent en oeuvre la réaction de CLAUS au contact d'un catalyseur en vue de récupérer lesdits composés $H_2S$ et $SO_2$ sous la forme de soufre.

Dans de tels procédés, on fait passer le gaz a désulfurer renfermant $H_2S$ et $SO_2$ au contact d'un catalyseur promoteur de la réaction de CLAUS donnée ci-dessus, en réalisant ce contact à des températures soit supérieures au point de rosée du soufre formé dans les gaz de réaction, auquel cas le soufre formé est présent à l'état de vapeur dans le milieu réactionnel issu de la réaction, ou bien à des températures inférieures au point de rosée du soufre formé, auquel cas ledit soufre se dépose sur le catalyseur, ce qui nécessite de régénérer périodiquement le catalyseur chargé de soufre par balayage au moyen d'un gaz non oxydant ayant une température comprise entre 200°C et 500°C.

En particulier, la réaction entre $H_2S$ et $SO_2$ à des températures supérieures au point de rosée du soufre, c'est-à-dire à des températures supérieures à environ 180°C, peut être réalisée au contact d'un catalyseur consistant en alumine ou bauxite (US-A-2403451), en alumine associée à un composé de zinc, cadmium, calcium ou magnésium (FR-A-2126257), en alumine activée associée à un compose oxyde ou sulfure de cobalt, nickel, fer ou uranium (FR-A-2190517), en alumine associée à un composé de titane (FR-A-2224203), en alumine associée à un composé d'yttrium, de lanthane ou d'un élément de la série des lanthanides de numéros atomiques allant de 58 à 71 (FR-A-2242144), en oxyde de titane (FR-A-2481145) ou encore en oxyde de titane associé à un sulfate d'un métal alcalino-terreux (EP-A-0060741). Les catalyseurs décrits dans les citations FR-A-2126257, FR-A-2190517, FR-A-2224203, FR-A-2481145 et EP-A-0060741 étant tout particulièrement intéressants lorsque le gaz à traiter, en plus des composés soufrés $H_2S$ et $SO_2$, renferme également des composés organiques du soufre tels que COS et/ou $CS_2$.

La réaction entre $H_2S$ et $SO_2$ mise en oeuvre à des températures telles que le soufre formé se dépose sur le catalyseur, peut être effectuée, quant à elle, au contact d'un catalyseur consistant, par exemple, en alumine activée, silice, mélange de silice et d'alumine ou encore zéolithe naturelle ou synthétique (FR-A-2180473 et FR-A-2224196), en alumine associée à un composé de fer, nickel, cobalt, cuivre ou zinc (FR-A-2327960), en alumine associée à un composé de titane, yttrium, lanthane ou lanthanide de numéro atomique allant de 58 à 71 (WO-A-9112201), en oxyde de titane associé à un composé de nickel, fer ou cobalt (EP-A-0215317 et EP-A-0218302) ou encore en charbon actif (FR-A-1603452).

Les catalyseurs tels que précités, qui sont utilisés pour promouvoir la réaction de CLAUS de formation de soufre entre $H_2S$ et $SO_2$ et éventuellement l'hydrolyse des composés COS et $CS_2$ en $H_2S$, présentent encore certaines insuffisances à l'usage prolongé.

Sous l'effet combiné de la température et de la présence d'eau, les catalyseurs à base d'alumine, de silice, d'oxyde de titane ou de charbon actif subissent, dans le temps, des transformations qui se manifestent par une diminution de la surface spécifique et de la porosité desdits catalyseurs et provoquent une perte de leur activité catalytique. En outre, les catalyseurs à base d'alumine sont susceptibles d'évoluer dans le temps par sulfatation, ce qui est une cause supplémentaire de perte d'activité catalytique. En ce qui concerne les catalyseurs à base de charbon actif, des précautions doivent être prises lors de leur mise en oeuvre pour éviter la combustion du charbon actif. D'autre part, lorsque des hydrocarbures sont présents dans les gaz à traiter, les catalyseurs précités à base d'alumine, de silice, d'oxyde de titane ou de charbon actif sont susceptibles d'empoisonnement par dépôt de carbone et d'hydrocarbures dans leur matrice, les catalyseurs ainsi empoisonnés n'étant pas régénérables par suite de la dégradation physicochimique que provoquerait l'application des températures élevées nécessaires à la réactivation de ces catalyseurs, par exemple, par oxydation directe des matières hydrocarbonées. De plus, pour les catalyseurs formés d'une phase catalytique apte à promouvoir la réaction de CLAUS associée à un support, ladite phase catalytique à tendance à migrer dans la maille du support, ce qui s'accompagne d'une perte d'activité catalytique et rend difficile voire même souvent impossible la récupération de la phase catalytique dans le catalyseur usé. Enfin, les catalyseurs précités ont une conductibilité thermique médiocre qui limite le transfert de chaleur des granulés de catalyseur vers la phase gazeuse. Il s'ensuit une élévation de la température au sein des granulés de catalyseur qui limite l'avancement des réactions.

On a maintenant trouvé que l'on pouvait remédier aux inconvénients des catalyseurs CLAUS utilisés pour promouvoir la réaction de formation de soufre entre $H_2S$ et $SO_2$ et ainsi obtenir un procédé conduisant à une conversion élevée avec une sélectivité améliorée en soufre se maintenant d'une manière durable dans le temps en constituant lesdits catalyseurs d'une phase catalytique, apte à promouvoir la réaction de CLAUS entre $H_2S$ et $SO_2$ et éventuellement l'hydrolyse des composés COS et $CS_2$ en $H_2S$, associée à un support en carbure de silicium.

Des catalyseurs contenant du vanadium et éventuellement du molybdène et/ou du titane et renfermant, en poids, 3 à 30% de carbure de silicium sont proposés dans DD-A-129037 pour promouvoir des réactions d'oxydation comme l'oxydation de $SO_2$ en $SO_3$. Dans EP-A-0422999, on propose encore d'effectuer l'oxydation directe de l'$H_2S$ en soufre par l'oxygène au contact d'un catalyseur à base d'un oxyde d'un métal tel que Ti, Ce, Zr, Al, Fe, Zn, Co, Ni, Cr, Mo ou V associé à un support monolithique en un matériau céramique, qui peut être tel que cordiérite, mullite, titanate de baryum, porcelaine, oxyde de thorium, oxyde de magnésium, stéatite, carbure de bore ou de silicium.

L'invention a donc pour objet un procédé de désulfuration catalytique d'un gaz renfermant les composés soufrés $H_2S$ et $SO_2$ avec récupération desdits composés sous la forme de soufre, dans lequel on fait passer le gaz a désulfurer au contact d'un catalyseur CLAUS constitué d'une phase catalytique, apte à promouvoir la réaction de CLAUS entre $H_2S$ et $SO_2$, associée à un support, ledit procédé se caractérisant en ce que le support du catalyseur CLAUS consiste en carbure de silicium.

Le gaz à désulfurer, que l'on met en contact avec le catalyseur CLAUS selon l'invention, renferme $H_2S$ et $SO_2$ en concentration globale génfralement comprise entre 0,01 % et 25 % et de préférence entre 0,02 % et 15 % en volume. Dans ledit gaz, le rapport molaire $H_2S$:$SO_2$ est avantageusement égal à environ 2:1, valeur correspondant à la stoechiométrie de la réaction de CLAUS, et peut varie de 0,2:1 à 4:1 ou plus.

Le gaz à désulfurer, que l'on traite selon l'invention, peut avoir des origines diverses. En particulier, ce gaz peut résulter de la combustion ménagée, en stoechiométrie CLAUS, d'un gaz acide renfermant de l'$H_2S$. Il peut également consister en un gaz résiduaire issu d'une usine à soufre CLAUS. Le gaz à désulfurer peut encore résulter de l'addition de la quantité requise de $SO_2$ à un gaz acide renfermant une faible quantité d'$H_2S$ et provenant, par exemple, de la gazéification du charbon ou des huiles lourdes ou bien peut être formé par addition de la quantité appropriée d'$H_2S$ à un gaz renfermant une faible quantité de $SO_2$, l'addition de $SO_2$ au gaz acide renfermant $H_2S$ ou l'addition d'$H_2S$ au gaz renfermant $SO_2$ pouvant être réalisée lors de la mise en contact avec le catalyseur promoteur de la réaction de CLAUS ou, de préférence, préalablement a cette mise en contact. Le gaz à désulfurer peut encore renfermer des composés organiques du soufre, par exemple COS et/ou $CS_2$, dont la concentration globale n'excède pas, dans la plupart des cas, 4 % en volume du gaz à désulfurer, mais peut éventuellement dépasser cette valeur.

Dans le catalyseur CLAUS selon l'invention, la phase catalytique, qui est associée au support en carbure de silicium, renferme au moins un métal apte, sous la forme d'oxyde ou de sel ou/et à l'état élémentaire, à promouvoir la réaction CLAUS de formation de soufre entre $H_2S$ et $SO_2$. Lorsque le gaz à désulfurer renferme un ou plusieurs composés organiques du soufre tels que COS et/ou $CS_2$, en plus des composés $H_2S$ et $SO_2$, la phase active du catalyseur contient également au moins un métal apte, dans un certain intervalle de températures, à promouvoir l'hydrolyse desdits composés organiques du soufre en $H_2S$, ledit métal pouvant être simultanément apte, sous la forme d'oxyde ou de sel ou/et à l'état élémentaire, à promouvoir la réaction de CLAUS entre $H_2S$ et $SO_2$. En particulier, la phase active du catalyseur à support de carbure de silicium renferme au moins un métal choisi parmi titane, zirconium, yttrium, lanthane, uranium, plomb, molybdène, fer, cobalt, nickel, calcium, zinc, magnésium, cadmium, lanthanides de numéro atomique allant de 58 à 71 et par exemple néodyme, praséodyme, samarium ou gadolinium, un tel métal étant apte, sous la tonne d'oxyde ou de sel ou/et à l'état élémentaire, à promouvoir la réaction de CLAUS entre $H_2S$ et $SO_2$ et simultanément, dans un certain domaine de température, l'hydrolyse des composés organiques du soufre tels que COS et/ou $CS_2$ en $H_2S$. La phase catalytique ou phase active associée au support de carbure de silicium dans le catalyseur selon l'invention, comptée en poids de métal, représente le plus souvent 0,1 à 20 %, plus particulièrement 0,2 à 15 % et plus spécialement 0,2 à 10 % du poids dudit catalyseur. Le support en carbure de silicium constitue avantageusement au moins 40% et plus particulièrement au moins 50% du poids du catalyseur.

La surface spécifique du catalyseur selon l'invention peut varier assez largement selon les conditions de mise en oeuvre du procédé de désulfuration. Avantageusement, ladite surface spécifique, déterminée par la méthode BET d'absorption d'azote, peut représenter 2 $m^2$/g à 600 $m^2$/g.

Le catalyseur CLAUS selon l'invention peut être préparé en faisant appel aux diverses méthodes connues pour incorporer un ou plusieurs composés métalliques à un solide constituant un support de catalyseur. En particulier, on peut opérer par imprégnation du support en carbure de silicium, se présentant sous la forme de poudre, de pastilles, de granulés, d'extrudés, de monolithes en nid d'abeille ou autres formes d'agglomérés, au moyen d'une solution ou d'un sol, dans un solvant tel que l'eau, du ou des composés métalliques désirés, puis séchage du support imprégné et calcination du produit séché à des températures pouvant aller de 250°C à 500°C, en opérant ou non en atmosphère inerte. Le catalyseur calciné peut être soumis à un traitement de réduction sous hydrogène, par exemple entre 200°C et 500°C, pour faire passer à l'état élémentaire le métal du composé métallique présent dans sa phase active. On peut encore envisager de préparer le catalyseur en opérant de manière à insérer des atomes métalliques catalytiquement actifs tels que précités dans la maille cristalline du carbure de silicium. Cette insertion de matières actives peut être réalisée soit pendant la production du carbure de silicium soit au cours d'une étape ultérieure.

Le carbure de silicium, utilisé pour constituer le support du catalyseur CLAUS selon l'invention, peut consister en l'un quelconque des carbures de silicium connus sous réserve qu'il présente les caractéristiques requises de surface spécifique, à savoir une surface spécifique, déterminée par la méthode BET d'adsorption d'azote, allant, par exemple,

de 2 m$^2$/g à 600 m$^2$/g.

En particulier, ledit carbure de silicium peut être obtenu en faisant appel à l'une quelconque des techniques décrites dans les citations EP-A-0313480 (correspondant à US-A-4914070) , EP-A-0440569, EP-A-0511919, EP-A-0543751 et EP-A-0543752.

Le catalyseur peut, en particulier, présenter une granulométrie comprise entre 0,3 mm et 15 mm et plus spécialement entre 0,5 mm et 10 mm.

Les temps de contact du milieu réactionnel gazeux, consistant en le gaz à désulfurer, avec le catalyseur selon l'invention peuvent aller de 0,2 seconde à 20 secondes et de préférence de 0,4 seconde à 12 secondes, ces valeurs étant données dans les conditions normales de pression et de température (temps de contact TPN).

Le procédé de désulfuration selon l'invention peut être mis en oeuvre à des températures supérieures au point de rosée du soufre formé au cours de la réaction entre H$_2$S et SO$_2$, ledit soufre étant alors présent sous la forme de vapeurs dans le milieu réactionnel, qui sort de la zone de réaction catalytique, et étant séparé dudit milieu réactionnel par condensation. On peut encore mettre en oeuvre le procédé de désulfuration selon l'invention en opérant à des températures inférieures au point de rosée du soufre formé au cours de la réaction entre H$_2$S et SO$_2$, ledit soufre se déposant alors sur le catalyseur et l'effluent gazeux recueilli à la sortie de la zone de réaction catalytique étant substantiellement exempt de soufre. Avantageusement, on peut choisir les températures de mise en oeuvre du procédé selon l'invention entre 30°C et 500°C. Pour une mise en oeuvre du procédé à des températures supérieures au point de rosée du soufre formé dans les gaz de réaction, on choisit des températures comprises entre 180°C et 500°C et plus spécialement entre 190°C et 400°C. Pour une mise en oeuvre du procédé à des températures inférieures au point de rosée du soufre formé, on choisit des températures dans l'intervalle 30°C à 180°C et plus particulièrement dans l'intervalle de 80°C à 160°C, qui encadre le domaine de solidification du soufre aux alentours de 120°C.

Lorsque l'on met en oeuvre le procédé selon l'invention aux températures comprises entre 180°C et 500°C et plus particulièrement entre 190°C et 400°C, la mise en contact du gaz à désulfurer renfermant H$_2$S et SO$_2$ avec le catalyseur CLAUS à support en carbure de silicium peut être réalisée dans une zone ou plusieurs zones de réaction catalytique renfermant ledit catalyseur. Le nombre de zones de réaction catalytique dépend, entre autres, de la composition du gaz à désulfurer et de la performance que l'on cherche à obtenir. Lorsque l'on fait appel à plusieurs zones de réaction catalytique, lesdites zones sont avantageusement disposées en série. Le catalyseur présent dans la zone unique de réaction catalytique peut consister entièrement en un catalyseur CLAUS selon l'invention à support en carbure de silicium ou bien être formé d'une couche d'un tel catalyseur associée à une ou plusieurs couches de catalyseur CLAUS conventionnel tel que, par exemple, bauxite, alumine, zéolithe, oxyde de titane ou encore oxyde de zirconium. Lorsqu'on opère dans plusieurs zones de réaction catalytique, qui, comme indiqué précédemment, sont avantageusement disposées en série, au moins l'une desdites zones de réaction catalytique renferme un catalyseur CLAUS selon l'invention à support en carbure de silicium, tandis que les autres zones de réaction catalytique contiennent un ou plusieurs catalyseurs CLAUS conventionnels comme, par exemple, ceux indiqués plus haut. Dans la zone ou les zones de réaction catalytique renfermant le catalyseur CLAUS selon l'invention à support en carbure de silicium, ledit catalyseur peut constituer la totalité du lit catalytique de la zone de réaction catalytique considérée ou bien former seulement une couche dudit lit catalytique, le reste étant constitué d'une ou plusieurs couches de catalyseur CLAUS conventionnel comme, par exemple, ceux cités précédemment. La zone unique de réaction catalytique ou chaque zone de réaction catalytique, lorsque plusieurs de telles de zones sont utilisées, opèrent à des températures comprises dans les intervalles précités, à savoir entre 180°C et 500°C et plus particulièrement entre 190°C et 400°C. Lorsque le gaz à désulfurer, en plus des composés soufrés H$_2$S et SO$_2$, renferme également des composés organiques du soufre, par exemple COS et/ou CS$_2$, la zone unique de réaction catalytique ou au moins l'une des zones de réaction catalytique, lorsque plusieurs de telles zones sont utilisées, renferme un catalyseur CLAUS selon l'invention à support en carbure de silicium et apte à promouvoir la réaction de CLAUS entre H$_2$S et SO$_2$ et l'hydrolyse des composés organiques du soufre en H$_2$S, par exemple catalyseur selon l'invention à support en carbure de silicium dont la phase active est à base d'un oxyde d'au moins un métal tel que Ti, Zr, Zn, Cd, Ca, Mg, Mo ou La, chaque zone de réaction catalytique renfermant un tel catalyseur selon l'invention travaillant à des températures comprises entre 180°C et 500°C et suffisantes pour réaliser l'hydrolyse des composés organiques du soufre en H$_2$S. Dans chaque zone de réaction catalytique renfermant le catalyseur selon l'invention promoteur de la réaction entre H$_2$S et SO$_2$ et de l'hydrolyse des composés organiques du soufre en H$_2$S, ledit catalyseur peut encore constituer la totalité du lit catalytique de la zone de réaction catalytique considérée ou bien former seulement une couche dudit lit catalytique, le reste étant constitué d'une ou plusieurs couches de catalyseur CLAUS conventionnel comme indiqué précédemment.

A la sortie de la zone unique de réaction catalytique ou de chacune des zones de réaction catalytique, lorsque plusieurs de telles zones sont utilisées, on recueille un effluent gazeux chargé de soufre vapeur, lequel effluent gazeux, avant toute réaction CLAUS subséquente, est amené à passer dans une zone de refroidissement à fin de séparation de la plus grande partie du soufre qu'il contient par condensation.

Si besoin est, l'effluent gazeux, que l'on recueille en sortie de la zone unique de réaction catalytique ou en sortie de la zone finale de réaction catalytique, lorsque plusieurs zones de réaction catalytique sont utilisées en série, dans la mise en oeuvre aux températures supérieures au point de rosée du soufre formé dans les gaz de réaction, peut être soumis à un traitement complémentaire de purification après séparation du soufre qu'il contient éventuellement, ledit traitement dépendant de la nature et de la quantité des composés soufrés gazeux restant dans l'effluent.

La mise en oeuvre du procédé selon l'invention aux températures supérieures au point de rosée du soufre formé dans les gaz de réaction, peut constituer en particulier l'étape de réaction CLAUS aux températures supérieures au point de rosée du soufre utilisée dans les procédés catalytiques de production de soufre à partir d'un gaz renferment de l'$H_2S$ du type de ceux décrits dans les citations FR-A-2511663 et FR-A-2540092.

Lorsque l'on met en oeuvre le procédé selon l'invention à des températures inférieures au point de rosée du soufre formé au cours de la réaction entre $H_2S$ et $SO_2$, c'est-à-dire aux températures dans l'intervalle 30°C à 180°C et plus particulièrement dans l'intervalle 80°C à 160°C, la mise en contact du gaz à désulfurer, qui dans cette forme de mise en oeuvre a une teneur globale en $H_2S$ et $SO_2$ généralement au plus égale à 5 % en volume et tout particulièrement au plus égale à 2,5 % en volume, avec le catalyseur CLAUS à support en carbure de silicium conduit à la formation de soufre qui se dépose sur le catalyseur.

Si la concentration globale en $H_2S$ et $SO_2$ ou/et la température du gaz à désulfurer amené au contact du catalyseur CLAUS selon l'invention, sont telles que, du fait de l'exothermicité de la réaction CLAUS, la température du milieu réactionnel, a l'issue de la réaction, est susceptible de dépasser la limite de température au-delà de laquelle le taux de conversion en soufre a tendance à décroître, on évacue les calories dégagées par ladite réaction en soumettant le catalyseur à un refroidissement par toute méthode connue. On peut, par exemple, réaliser ce refroidissement à l'aide d'un fluide froid circulant dans un système d'échange indirect de chaleur avec la masse catalytique. On peut encore opérer en plaçant le catalyseur dans un réacteur tubulaire constitué de tubes disposés dans une calandre avec, soit le catalyseur présent dans les tubes et un fluide froid circulant entre les tubes côté calandre ou bien un fluide froid circulant dans les tubes et le catalyseur présent entre les tubes côté calandre. On peut également mettre en oeuvre la réaction catalytique dans un réacteur à plusieurs étages de catalyseur avec refroidissement du milieu réactionnel entre les étages catalytiques successifs par échange indirect de chaleur avec un fluide froid, l'échange de chaleur ayant lieu à l'intérieur ou à l'extérieur du réacteur catalytique.

Si le gaz à désulfurer renferme une quantité importante d'eau, par exemple supérieure à 10 % en volume, en plus des composés soufrés $H_2S$ et $SO_2$, les températures de réaction inférieures au point de rosée du soufre formé sont choisies, de préférence, pour être supérieures au point de rosée de l'eau contenue dans le gaz à désulfurer.

Lorsque le gaz à désulfurer, en plus des composés soufrés $H_2S$ et $SO_2$, renferme également des composés organiques du soufre, par exemple COS et/ou $CS_2$, on peut soumettre avantageusement ledit gaz à une étape d'hydrolyse avant de mettre en oeuvre la réaction de CLAUS entre $H_2S$ et $SO_2$ aux températures inférieures au point de rosée du soufre formé. Cette étape d'hydrolyse peut être mise en oeuvre par passage du gaz à désulfurer renfermant les composés organiques du soufre au contact d'un catalyseur d'hydrolyse desdits composés organiques en $H_2S$, ledit gaz renfermant une quantité d'eau suffisante pour cette hydrolyse, en opérant à des températures comprises entre 180°C et 500°C et suffisantes pour qu'ait lieu l'hydrolyse. Le catalyseur d'hydrolyse consiste avantageusement en un catalyseur selon l'invention apte à promouvoir l'hydrolyse des composés organiques du soufre en $H_2S$ et particulièrement en un tel catalyseur dont la phase active est à base d'un oxyde de Ti, Zr, Zn, Cd, Ca, Mg, Mo ou La. La mise en oeuvre selon l'invention de l'hydrolyse suivie de la réaction de CLAUS entre $H_2S$ et $SO_2$ aux températures inférieures au point de rosée du soufre formé peut être réalisée, par exemple, comme indiqué dans les citations FR-A-2632626 et FR-A-2653422.

Au cours du déroulement de la réaction entre $H_2S$ et $SO_2$ aux températures inférieures au point de rosée du soufre formé, le catalyseur CLAUS se charge progressivement en soufre. Périodiquement, on procède à la régénération du catalyseur chargé de soufre par balayage dudit catalyseur a l'aide d'un gaz en opérant à des températures comprises entre 200°C et 500°C et de préférence entre 250°C et 450°C pour vaporiser le soufre retenu sur le catalyseur, puis on refroidit le catalyseur régénéré jusqu'à une température inférieure au point de rosée du soufre pour une nouvelle mise en oeuvre de la réaction entre $H_2S$ et $SO_2$, ce refroidissement étant réalisé au moyen d'un gaz ayant une température appropriée inférieure à 180°C.

Le gaz de balayage, utilisé pour la régénération du catalyseur chargé de soufre, peut être tel que méthane, azote, $CO_2$ ou mélanges de tels gaz ou peut encore consister en une fraction du courant gazeux issu de l'étape de réaction CLAUS basse température ou en une fraction du gaz à désulfurer ou du gaz désulfuré. Le gaz de balayage utilisé pour la régénération précitée peut éventuellement contenir une certaine proportion d'un composé réducteur tel que par exemple, $H_2$, CO ou $H_2S$, au moins au cours de la phase finale de la régénération, c'est-à-dire après la vaporisation de la plus grande partie du soufre déposé sur le catalyseur CLAUS, aux fins de réduction éventuelle des sulfates et/ou de conditionnement de la matière active du catalyseur.

Selon la phase active utilisée pour le catalyseur CLAUS à support en carbure de silicium, l'utilisation d'un composé réducteur en fin de la phase de régénération est destinée à ramener le métal de la phase active du catalyseur, de la forme sulfate/sulfite sous laquelle ledit métal se trouve en fin de période de désulfuration à la forme de métal élémentaire ou/et de sulfure de métal qui constituent les formes actives du catalyseur CLAUS sous lesquelles il doit être ramené avant son utilisation pour la période suivante de désulfuration.

La mise en oeuvre de la réaction CLAUS en opérant selon l'invention aux températures inférieures au point de rosée du soufre formé, peut être réalisée dans une zone unique de réaction catalytique renfermant le catalyseur CLAUS à support en carbure de silicium, qui opère alternativement en phase de réaction CLAUS et en phase de régénération/refroidissement. Une telle mise en oeuvre est retenue lorsque le gaz à désulfurer renferme une faible teneur globale en composés soufrés $H_2S$ et $SO_2$ et que, de ce fait, la régénération du catalyseur est peu fréquente. Avantageusement, la mise en oeuvre de la réaction catalytique est réalisée dans une pluralité de zones de réaction catalytique disposées en parallèle et renfermant chacune un catalyseur CLAUS selon l'invention à support en carbure de silicium, ces zones de réaction catalytique opérant de telle sorte que l'une au moins desdites zones fonctionne en phase de régénération/refroidissement, tandis que les autres zones sont en phase de réaction CLAUS. On peut encore opérer en ayant une ou plusieurs zones en phase de réaction catalytique CLAUS, au moins une zone en phase de régénération et au moins une zone en phase de refroidissement. Chaque zone de réaction catalytique peut comporter plusieurs étages de catalyseur, par exemple deux ou trois étages, avec refroidissement du milieu réactionnel entre les étages catalytiques successifs par échange indirect de chaleur avec un fluide froid, l'échange de chaleur ayant lieu à l'intérieur ou à l'extérieur de la zone de réaction catalytique. La mise en oeuvre utilisant une pluralité de zones de réaction catalytique disposées en parallèle, comme indiqué plus haut, permet de réaliser en continu le traitement du gaz à désulfurer.

Le gaz utilisé pour la régénération du catalyseur CLAUS circule de préférence en circuit fermé à partir d'une zone de chauffage, en passant successivement par la zone catalytique en cours de régénération, d'où le soufre est enlevé par vaporisation, et une zone de refroidissement, dans laquelle la majeure partie du soufre présent dans ledit gaz est séparée par condensation, pour revenir à la zone de chauffage. Bien entendu, le gaz de régénération peut également circuler en circuit ouvert, par exemple en utilisant le gaz à désulfurer ou le gaz désulfuré pour constituer ledit gaz de régénération. Dans le cas d'une utilisation du gaz à désulfurer, à titre de gaz de régénération, ce gaz est recyclé en amont des zones réactionnelles après séparation du soufre vaporisé à la régénération.

Le gaz utilisé pour le refroidissement du catalyseur CLAUS régénéré est du même type que celui employé pour la régénération du catalyseur chargé de soufre. Les circuits de gaz de régénération et de gaz de refroidissement peuvent être indépendants l'un de l'autre. Toutefois, selon un mode de réalisation, le circuit de gaz de régénération, défini plus haut, peut également comporter une dérivation reliant la sortie de sa zone de refroidissement à l'entrée de la zone en cours de régénération en bipassant sa zone de chauffage, ce qui permet de court-circuiter ladite zone de chauffage et ainsi d'utiliser le gaz de régénération comme gaz de refroidissement.

Le mode de mise en oeuvre du procédé selon l'invention pour la réaction de formation de soufre entre $H_2S$ et $SO_2$, aux températures inférieures au point de rosée du soufre formé lors de la réaction, peut avantageusement constituer l'étape de réaction CLAUS à température inférieure au point de rosée du soufre (réaction CLAUS à basse température) des procédés décrits dans les citations FR-A-2180473, FR-A-2224196, FR-A-2277877, FR-A-2511663, FR-A-2540092, FR-A-2589082, FR-A-2589140, FR-A-2589141, FR-A-2632626 et FR-A-2653422.

Selon une forme particulière de mise en oeuvre du procédé selon l'invention, utilisable tant aux températures supérieures au point de rosée du soufre formé par la réaction entre $H_2S$ et $SO_2$ qu'aux températures inférieures audit point de rosée, chacune des zones de réaction catalytique CLAUS ou au moins la première desdites zones lorsqu'une pluralité de zones catalytiques CLAUS sont utilisées en série est pourvue d'une masse catalytique comportant (i) une couche d'attaque constituée d'un catalyseur CLAUS selon l'invention à support de carbure de silicium, dont la phase catalytique renferme, sous la forme d'oxyde ou de sel et/ou à l'état élémentaire, au moins un métal choisi parmi Fe, Ni, Co, Cu et Zn et (ii) une couche complémentaire d'un catalyseur CLAUS conventionnel à base d'alumine, par exemple alumine, bauxite ou zéolite. Cette forme particulière de mise en oeuvre permet, en utilisant une proportion réduite d'un catalyseur selon l'invention, de prolonger dans le temps le maintien de l'activité des catalyseurs CLAUS conventionnels à base d'alumine employés dans les procédés de production de soufre par réaction entre $H_2S$ et $SO_2$, en particulier lorsque le gaz à traiter renferme une petite quantité d'oxygène, qui peut aller jusqu'à environ 1 % an volume. Le catalyseur précité à support en carbure de silicium, mis en oeuvre dans la couche d'attaque, permet l'élimination de l'oxygène présent et protège ainsi les catalyseurs de la couche complémentaire. Dans le cas d'une couche complémentaire constituée de catalyseurs à base d'alumine, ladite couche d'attaque forme une protection évitant leur empoisonnement par sulfatation de l'alumine et permet ainsi de maintenir l'activité catalytique de l'alumine vis-à-vis de la réaction de CLAUS et de l'hydrolyse des composés COS et $CS_2$.

L'invention est illustrée par les exemples suivants donnés à titre non limitatif.

Exemple 1 :

On effectuait des essais de mise en oeuvre de la réaction de CLAUS à des températures supérieures au point de rosée du soufre formé par la réaction entre $H_2S$ et $SO_2$, en faisant appel soit à un catalyseur selon l'invention (essais 1.A.1, 1.A.2 et 1.A.3 selon l'invention), soit à un catalyseur témoin à base d'alumine (essais témoins 1.B.1, 1.B.2 et 1.B.3), et en opérant dans des conditions utilisées sur une usine à soufre pour un premier convertisseur catalytique (essais 1.A.1 et 1.B.1), un deuxième convertisseur catalytique (essais 1.A.2 et 1.B.2) et un troisième convertisseur catalytique (essais 1.A.3 et 1.B.3).

Le catalyseur témoin à base d'alumine consistait en billes, de 4 à 6 mm de diamètre, d'une alumine activée ayant une surface spécifique BET de 253 m$^2$/g.

Le catalyseur selon l'invention était formé d'un support en carbure de silicium imprégné d'un composé de titane et renfermait 4,8 % de titane en poids du catalyseur.

La préparation du catalyseur selon l'invention était réalisée comme suit. On imprégnait tout d'abord des grains de carbure de silicium, ayant une granulométrie comprise entre 0,8 min et 1 mm et une surface spécifique BET de 150 m$^2$/g, au moyen d'oxychlorure de titane en quantité propre à fournir la quantité désirée de titane dans le catalyseur résultant. Le produit imprégné obtenu était séché à température ambiante pendant 10 heures, puis à 120°C pendant 15 heures et ensuite soumis à une calcination à 500°C pendant 6 heures pour produire le catalyseur. Le catalyseur obtenu renfermait, conne indiqué plus haut, 4,8 % de titane en poids et présentait une surface spécifique BET égale à 132 m$^2$/g.

On mettait en oeuvre chacun des essais dans un réacteur catalytique renfermant le catalyseur selon l'invention (essais 1.A.1, 1.A.2 et 1.A.3 selon l'invention) ou le catalyseur témoin (essais 1.B.1, 1.B.2 et 1.B.3). Chaque réacteur comportait une entrée et une sortie séparées par un lit catalytique, un conduit d'amenée des gaz, ledit conduit étant connecté à l'entrée du réacteur et équipé d'un réchauffeur, et un conduit d'évacuation des gaz prolongeant la sortie du réacteur et équipé d'un condenseur a soufre refroidi à la vapeur.

Le gaz à traiter renfermant H$_2$S et SO$_2$, utilisé pour réaliser la réaction de CLAUS, était préchauffé à une température θ, par passage dans le réchauffeur associé au réacteur catalytique, puis injecté dans ledit réacteur à cette température. L'effluent gazeux sortant du réacteur catalytique, par le conduit d'évacuation dudit réacteur, était refroidi à environ 175°C dans le condenseur associé au réacteur catalytique pour séparer le soufre contenu dans ledit effluent. Le rendement en soufre de la réaction était calculé à partir des teneurs en H$_2$S et SO$_2$ du gaz entrant dans le réacteur catalytique et de l'effluent gazeux issu du condenseur à soufre.

Les conditions opératoires spécifiques aux essais étaient les suivantes :

- Essais 1. A .1 et 1. B.1 : Le gaz contenant H$_2$S et SO$_2$ amené au réacteur catalytique renfermait, en volume, 9 % d'H$_2$S, 4,5 % de SO$_2$, 20 % d'H$_2$O et 66,5 % de N$_2$. La température de sortie du réacteur catalytique était égale à 300°C. Ces conditions conduisent à un rendement thermodynamique en soufre égal à 85,9 %.
- Essais 1. A. 2 et 1. B. 2 : Le gaz contenant H$_2$S et SO$_2$ amené au réacteur catalytique renfermait, en volume, 2,5 % d'H$_2$S, 1,25 % de SO$_2$, 27 % d'H$_2$O et 69,25 % de N$_2$. La température de sortie du réacteur catalytique était égale à 250°C. Ces conditions conduisent à un rendement thermodynamique en soufre égal à 78,7 %.
- Essais 1. A:3 et 1. B. 3 : Le gaz contenant H$_2$S et SO$_2$ amené au réacteur catalytique renfermait, en volume, 1 % d'H$_2$S, 0,5 % de SO$_2$, 30 % d'H$_2$O et 68,5 % de N$_2$. La température de sortie du réacteur catalytique était égale à 220°C. Ces conditions conduisent à un rendement thermodynamique en soufre égal à 70,8 %.

Les résultats obtenus dans les différents essais sont rassemblés dans le tableau I.

Tableau I

| Essai | Catalyseur | Temps de contact TPN(s) | Rendement en soufre (%) |
|---|---|---|---|
| 1.A.1 | $TiO_2/SiC$(*) | 0,3 | 84 |
| | | 0,6 | 85,9 |
| | | 1 | 85,9 |
| | | 2 | 85,9 |
| 1.B.1 | Alumine | 0,3 | 70 |
| | | 0,6 | 77 |
| | | 1 | 82 |
| | | 2 | 83 |
| 1.A.2 | $TiO_2/SiC$(*) | 0,3 | 62 |
| | | 0,6 | 71 |
| | | 1 | 75 |
| | | 2 | 78 |
| 1.B.2 | Alumine | 0,3 | 32 |
| | | 0,6 | 52 |
| | | 1 | 59 |
| | | 2 | 70 |
| 1.A.3 | $TiO_2/SiC$(*) | 0,3 | 49 |
| | | 0,6 | 57 |
| | | 1 | 64 |
| | | 2 | 67 |
| 1.B.3 | Alumine | 0,3 | 25 |
| | | 0,6 | 46 |
| | | 1 | 55 |
| | | 2 | 56 |

(*) Le catalyseur utilisé dans les essais 1.A.1, 1.A.2 et 1.A.3 selon l'invention est abrégé en "$TiO_2/SiC$".

L'examen des résultats figurant au tableau I fait apparaître que la mise en oeuvre de la réaction de CLAUS réalisée comme le propose l'invention avec un catalyseur CLAUS à support de carbure de silicium conduit à des rendements an soufre très supérieurs, à temps de contact comparables, à ceux obtenus avec un catalyseur CLAUS conventionnel comme l'alumine.

En outre, on a également observé que l'introduction de 2000 vpm d'oxygène dans le gaz renfermant $H_2S$ et $SO_2$ à traiter ne modifie pas les rendements an soufre obtenus avec le catalyseur selon l'invention, alors que ces rendements diminuent substantiellement dans le temps avec le catalyseur d'alumine, principalement aux températures relativement basses utilisées dans les deuxième et troisième réacteurs catalytiques opérant au-dessus du point de rosée du soufre.

Exemple 2 :

En opérant dans des réacteurs catalytiques de structure comparable à celle des réacteurs catalytiques utilisés dans l'exemple 1, on réalisait des essais selon l'invention (essais 2.A.1 et 2.A.2) et des essais témoins (essais 2.B.1 et 2.B.2) d'hydrolyse de composés organiques du soufre, présents dans des gaz renfermant $H_2S$ et $SO_2$ soumis à un traitement catalytique dans des conditions opératoires de premier convertisseur catalytique d'usines à soufre, an faisant appel soit à un catalyseur selon l'invention (essais 2.A.1 et 2.A.2) identique au catalyseur au titane sur support de carbure de silicium décrit dans l'exemple 1, soit à un catalyseur témoin (essais 2.B.1 et 2.B.2) identique au catalyseur à base d'alumine utilisé dans ledit exemple 1.

Le gaz à traiter renfermait, outre $H_2S$ et $SO_2$, un composé organique du soufre consistant en $CS_2$ (essais 2.A.1 et 2.B.1) ou en COS (essais 2.A.2 et 2.B.2). L'effluent gazeux sortant du réacteur catalytique, par le conduit d'évacuation dudit réacteur, était refroidi comme indiqué dans l'exemple 1 pour séparer le soufre contenu dans ledit effluent. Le rendement d'hydrolyse du composé COS ou $CS_2$ était déterminé à partir des teneurs en COS ou $CS_2$ du gaz entrant dans le réacteur catalytique et de l'effluent gazeux issu du condenseur à soufre, lesdites teneurs étant obtenues par analyse chromatographique.

Les conditions opératoires spécifiques aux essais étaient les suivantes :

- Essais 2. A.1 et 2 .B.1 : Le gaz à traiter amené au réacteur catalytique renfermait, en volume, 7 % d'$H_2S$, 4 % de $SO_2$, 0,8 % de CS2, 28 % d'$H_2O$ et 60,2 % de $N_2$. La température de sortie du réacteur catalytique était égale à 320°C.
- Essais 2 .A.2 et 2.B.2 : Le gaz à traiter amené au réacteur catalytique renfermait, en volume, 7 % d'$H_2S$, 3,75 % de $SO_2$, 0,5 % de COS, 28 % d'$H_2O$ et 60,75 % de $N_2$. La température de sortie du réacteur catalytique était égale à 320°C.

Les résultats obtenus dans les différents essais sont rassemblés dans le tableau II.

Tableau II

| Essai | Catalyseur | Temps de contact TPN (s) | Composé hydrolysé | Rendement d'hydrolyse (%) |
|-------|------------|--------------------------|--------------------|---------------------------|
| 2.A.1 | $TiO_2$/SiC | 1 | $CS_2$ | 70 |
|       |            | 2 |        | 85 |
|       |            | 4 |        | 97 |
| 2.B.1 | Alumine    | 1 | $CS_2$ | 40 |
|       |            | 2 |        | 55 |
|       |            | 4 |        | 70 |
| 2.A.2 | $TiO_2$/SiC | 1 | COS   | 84 |
|       |            | 2 |        | 96 |
|       |            | 4 |        | 100 |
| 2.B.2 | Alumine    | 1 | COS   | 57 |
|       |            | 2 |        | 68 |
|       |            | 4 |        | 84 |

L'examen des résultats figurant au tableau II fait ressortir que les rendements d'hydrolyse selon l'invention des composés organiques du soufre $CS_2$ et COS sont très substantiellement améliorés, à temps de contact comparables, par rapport à ceux obtenus avec un catalyseur conventionnel CLAUS comme l'alumine.

Exemple 3 :

On effectuait des essais de mise en oeuvre de la réaction CLAUS à des températures inférieures au point de rosée du soufre formé par la réaction entre $H_2S$ et $SO_2$, en faisant appel soit à un catalyseur selon l'invention (essai 3.A.1 selon l'invention), soit à un catalyseur témoin à base d'alumine (essai témoin 3.B.1).

Le catalyseur témoin à base d'alumine consistait en billes, de 2 à 4 mm de diamètre, d'une alumine activée ayant une surface spécifique BET de 242 $m^2$/g.

Le catalyseur selon l'invention était formé d'un support en carbure de silicium imprégné d'un composé de titane pour représenter 5 % de titane en poids du catalyseur.

La préparation du catalyseur utilisé dans l'essai selon l'invention était réalisée comme suit. On imprégnait tout d'abord des grains de carbure de silicium, ayant une granulométrie comprise entre 2 et 4 mm et une surface spécifique BET de 150 m$^2$/g, au moyen d'oxychlorure de titane en quantité propre à fournir la quantité désirée de titane dans le catalyseur résultant. Le produit imprégné était séché à température ambiante, puis à 120°C et ensuite calciné comme indiqué dans l'exemple 1 pour produire le catalyseur. Le catalyseur au titane renfermait, comme indiqué plus haut, 5 % en poids de titane et présentait une surface spécifique BET égale à 130 m$^2$/g.

On mettait en oeuvre chacun des essais dans un réacteur de conversion catalytique présentant une entrée et une sortie séparées par un lit fixe de catalyseur promoteur de la réaction de CLAUS, ledit réacteur opérant de telle sorte qu'alternativement, par l'intermédiaire de vannes commutables par une horloge, il était en phase de réaction, c'est-à-dire avait son entrée reliée à un conduit d'amenée du mélange gazeux à désulfurer ou bien en phase de régénération/refroidissement, c'est-à-dire était balayé au moyen d'un mélange gazeux synthétique porté à 300°C et constitué, en volume, de 70 % d'azote et de 30 % d'H$_2$O. Au cours de la régénération, le soufre déposé sur le catalyseur était vaporisé et entraîné par le gaz de balayage, puis séparé de ce dernier, à la sortie du réacteur, par condensation. Le réacteur régénéré était ensuite refroidi pour être ramené à la température appropriée pour l'épuration suivante, ledit refroidissement étant réalisé par balayage avec le gaz de régénération maintenu à une température d'environ 80°C.

Dans chacun des essais 3.A.1 et 3.B.1, le gaz contenant H$_2$S et SO$_2$ amené au réacteur catalytique en phase de réaction CLAUS renfermait, en volume, 0,28 % d'H$_2$S, 0,14 % de SO$_2$, 30 % d'H$_2$O et 69,58 % de N2, ledit gaz ayant un débit correspondant à un temps de séjour au contact du catalyseur CLAUS égal à 4 secondes dans les conditions normales de pression et de température. La température de sortie du réacteur en phase de réaction CLAUS était égale à 140°C. A l'issue de la régénération, le catalyseur régénéré était refroidi à une température d'environ 140°C avant d'être remis en phase d'épuration (réaction CLAUS).

Le réacteur catalytique opérait alternativement pendant 30 heures en phase de réaction catalytique CLAUS et pendant 30 heures, dont 8 heures de refroidissement, en phase de régénération/refroidissement.

Après 50 cycles de fonctionnement comportant chacun un phase de réaction CLAUS (désulfuration) et une phase de régénération/refroidissement, la teneur globale des composes H$_2$S et SO$_2$ dans le gaz désulfuré issu du réacteur catalytique en phase de réaction CLAUS se stabilisait à une valeur $C_R$. On déterminait ladite valeur par analyse chromatographique, et, à partir de cette valeur et de la teneur globale Co des composés H$_2$S et SO$_2$ dans le gaz à traiter, on calculait le rendement en soufre de la réaction de CLAUS.

Les résultats obtenus dans les essais sont rassemblés dans le tableau III.

Tableau III

| Essai | Catalyseur | $C_R$ (vpm) | Rendement en soufre (%) |
|-------|-----------|-------------|-------------------------|
| 3.A.1 | TiO$_2$/SiC | 710 | 83,1 |
| 3.B.1 | Alumine | 1050 | 75 |

L'examen des résultats figurant au tableau III fait apparaître que la mise en oeuvre de la réaction CLAUS en opérant avec un catalyseur CLAUS selon l'invention à support en carbure de silicium, à des températures inférieures au point de rosée du soufre formé par la réaction entre H$_2$S et SO$_2$ conduit encore à des rendements en soufre améliorés par rapport à ceux obtenus avec un catalyseur CLAUS conventionnel comme l'alumine.

Exemple 4 :

On effectuait des essais de mise en oeuvre de la réaction de CLAUS à partir d'un gaz renfermant, outre H$_2$S et SO$_2$, une petite quantité d'oxygène, en opérant à des températures supérieures au point de rosée du soufre formé par la réaction entre H$_2$S et SO$_2$ sur une masse catalytique constituée soit d'une couche d'attaque d'un catalyseur au nickel sur support de carbure de silicium suivie d'une couche d'un catalyseur CLAUS conventionnel à base d'alumine (essai 4.A.1 selon l'invention), soit uniquement du catalyseur CLAUS conventionnel à base d'alumine (essai témoin 4.B.1).

Le catalyseur témoin à base d'alumine consistait en billes, de 2 à 4 min de diamètre, d'une alumine activée ayant une surface spécifique BET de 263 m$^2$/g.

Le catalyseur selon l'invention était formé d'un support en carbure de silicium imprégné d'un composé de nickel et renfermait, en poids, 4 % de nickel, ledit catalyseur ayant une surface spécifique BET de 138 m$^2$/g.

Le catalyseur selon l'invention était obtenu par imprégnation de grains de carbure de silicium microporeux à l'aide d'une quantité appropriée d'acétate de nickel en solution aqueuse, puis séchage à 100°C du produit imprégné et calcination du produit séché à 300°C pendant trois heures. Les grains de carbure de silicium, de dimension moyenne allant de 2 à 4 mm, présentait une surface spécifique BET de 150 $m^2$/g.

On mettait en oeuvre chacun des essais dans un réacteur catalytique renfermant la masse catalytique selon l'invention (essai 4.A.1) ou la masse catalytique témoin (essai 4.B.1) et fonctionnant de manière isotherme, ledit réacteur ayant une structure comparable à celle du réacteur utilisé dans l'exemple 1 et étant équipé de moyens permettant de maintenir sa température à une valeur donnée.

Le gaz à traiter, injecté dans le réacteur catalytique, renfermait, en volume, 9 % d'$H_2S$, 4,5 % de $SO_2$, 27 % d'$H_2O$, 0,2 % d'oxygène, 0,5 % de COS, 0,2 % de $CS_2$ et 58,6 % de N2.

Le réacteur catalytique était maintenu à une température de 320°C au cours de chaque essai.

L'effluent gazeux sortant du réacteur catalytique, par le conduit d'évacuation de ce réacteur, était refroidi à environ 175°C dans le condenseur associé au réacteur catalytique pour séparer le soufre contenu dans ledit effluent. Le rendement en soufre de la réaction était déterminé, comme indiqué dans l'exemple 1, après une période de fonctionnement de 800 heures.

Les conditions opératoires spécifiques aux essais étaient les suivantes :

- <u>Essai 4.A.1</u> : Les temps de contact TPN du gaz à traiter avec la couche d'attaque puis avec la couche à base d'alumine de la masse catalytique selon l'invention étaient égaux respectivement à 0,5 s et 1 s.
- <u>Essai 4.B.1</u> : Le temps de contact TPN du gaz à traiter avec la masse catalytique à base d'alumine était égal à 1,5 s.

Les résultats obtenus sont présentés dans le tableau IV.

Tableau IV

| Essai | Masse catalytique | Temps de contact TPN (s) | $R_{800}$(*) (%) | Conversion de COS et $CS_2$ | |
|---|---|---|---|---|---|
| | | | | COS(%) | $CS_2$(%) |
| 4.A.1 | NiO/SiC puis alumine | 0,5 puis 1 | 78 | 95 | 55 |
| 4.B.1 | Alumine | 1,5 | 70 | 60 | 15 |

(*) $R_{800}$ désigne le rendement de la réaction de CLAUS, basé sur la disparition du $SO_2$, après 800 heures de fonctionnement.

L'examen des résultats figurant au tableau IV fait apparaître l'efficacité du catalyseur selon l'invention (NiO/SiC) pour prévenir les effets néfastes de l'oxygène sur l'activité d'un catalyseur conventionnel CLAUS comme l'alumine.

<u>Exemple 5</u> :

On effectuait des essais, à savoir un essai 5.A.1 selon l'invention et deux essais témoins 5.B.1 et 5.C.1, de mise en oeuvre de la réaction de CLAUS à partir d'un gaz renfermant, outre $H_2S$ et $SO_2$, une petite quantité d'oxygène, en opérant à des températures inférieures au point de rosée du soufre formé par la réaction entre $H_2S$ et $SO_2$ sur une masse catalytique différente d'un essai à l'autre et constituée comme indiqué ci-après.

- <u>Essai 5.A.1 (selon l'invention)</u> : La masse catalytique consistait en une couche d'attaque du catalyseur au nickel à support en carbure de silicium décrit dans l'exemple 4 suivie d'une couche d'une alumine ayant une surface spécifique BET de 263 $m^2$/g et se présentant sous la forme de billes ayant un diamètre de 2 à 4 mm.
- <u>Essai 5.B.1 (témoin)</u> : La masse catalytique consistait en une couche d'attaque d'un catalyseur au fer sur support d'alumine suivie d'une couche d'une alumine identique à celle utilisée dans l'essai 5.A.1.
- <u>Essai 5.C.1 (témoin)</u> : La masse catalytique consistait uniquement en une couche d'une alumine identique à celle utilisée dans les essais 5.A.1 et 5.B.1.

Le catalyseur au fer, renfermant 4,5 % de fer en poids du catalyseur, était préparé par imprégnation de billes d'alumine activée, ayant un diamètre de 2 à 4 mm et une surface spécifique BET égale à 263 $m^2$/g, au moyen de la quantité appropriée de sulfate ferreux en solution aqueuse, puis séchage du produit imprégné à 100°C et calcination du produit sec à 300°C pendant 3 heures.

On mettait en oeuvre chacun des essais dans un réacteur de conversion catalytique présentant une entrée et une sortie séparées par un lit fixe de la masse catalytique choisie, ledit réacteur opérant de telle sorte qu'alternativement, par l'intermédiaire de vannes commutables par une horloge, il était en phase de réaction, c'est-à-dire avait son entrée reliée à un conduit d'amenée du mélange gazeux à désulfurer, ou bien en phase de régénération/refroidissement, c'est-à-dire était balayé par un mélange gazeux synthétique porté à 300°C et constitué, en volume, de 10 % d'$H_2S$, 33 % d'$H_2O$ et 57 % de N2. Au cours de la régénération, le soufre déposé sur la masse catalytique était vaporisé et entraîné par le gaz de balayage, puis séparé de ce dernier, à la sortie du réacteur, par condensation. Le réacteur régénéré était ensuite refroidi pour être ramené à la température appropriée pour l'épuration suivante, ledit refroidissement étant réalisé par balayage au moyen d'un gaz constitué de 38 % d'$H_2O$ et de 62 % de N2, en volume, et possédant une température d'environ 80°C.

Dans chacun des essais 5.A.1, 5.B.1 et 5.C.1, le gaz contenant $H_2S$ et $SO_2$ amené au réacteur catalytique en phase de réaction CLAUS renfermait, en volume, 0,8 % d'$H_2S$, 0,4 % de $SO_2$, 0,08 % d'oxygène, 29 % d'$H_2O$ et 69,72 % de N2.

Dans l'essai 5.A.1, les temps de contact TPN du gaz à traiter avec la couche d'attaque de catalyseur au nickel, puis avec la couche d'alumine était égaux respectivement à 2,2 s et 4,4 s.

Dans l'essai 5.B.1, les temps de contact TPN du gaz à traiter avec la couche d'attaque de catalyseur au fer, puis avec la couche d'alumine étaient égaux respectivement à 2,2 s et 4,4 s.

Dans l'essai 5.C.1, le temps de contact TPN du gaz à traiter avec la couche unique d'alumine était égal à 6,6 s.

La température du réacteur était maintenue à 136°C au cours de la phase de réaction CLAUS de chacun des essais. A l'issue de la régénération, le catalyseur régénéré était refroidi à cette température avant d'être remis en phase d'épuration (réaction CLAUS).

Dans chaque essai, le réacteur catalytique opérait alternativement pendant 18 heures en phase de réaction catalytique CLAUS et pendant 6 heures, dont 1,5 heure de refroidissement, en phase de régénération/refroidissement.

Après 20 cycles de fonctionnement comportant chacun une phase de réaction CLAUS (épuration) et une phase de régénération/refroidissement, on déterminait, par analyse chromatographique, la teneur globale $C_G$ des composés $H_2S$ et $SO_2$ dans le gaz désulfuré issu du réacteur catalytique. A partir de cette valeur $C_G$ et de la teneur globale Co des composés $H_2S$ et $SO_2$ contenus dans le gaz à traiter, on calculait le rendement en soufre de la réaction de CLAUS.

Les résultats obtenus sont rassemblés dans le tableau V.

Tableau V

| Essai | Masse catalytique | Temps de contact TPN (s) | $C_G$ (v.p.m) | Rendement en soufre (%) |
|---|---|---|---|---|
| 5.A.1 | Catalyseur au Ni à support SiC puis alumine | 2,2 puis 4,4 | 550 | 95,4 |
| 5.B.1 | Catalyseur au Fe à support alumine puis alumine | 2,2 puis 4,4 | 710 | 94,1 |
| 5.C.1 | Alumine | 6,6 | 1850 | 84,5 |

L'examen des résultats figurant au tableau V fait apparaître l'efficacité de la couche d'attaque en catalyseur selon l'invention (NiO/SiC) pour prévenir les effets néfastes de l'oxygène sur l'activité du catalyseur CLAUS conventionnel consistant en alumine. Il apparaît également que, dans cette fonction, le catalyseur selon l'invention est plus efficace que le catalyseur au fer sur support d'alumine utilisé jusque là.

**Revendications**

1. Procédé de désulfuration catalytique d'un gaz renfermant les composés soufrés $H_2S$ et $SO_2$ avec récupération desdits composés sous la forme de soufre, dans lequel on fait passer le gaz à désulfurer au contact d'un catalyseur CLAUS constitué d'une phase catalytique, apte à promouvoir la réaction de CLAUS entre $H_2S$ et $SO_2$, associée à un support, ledit procédé se caractérisant en ce que le support du catalyseur CLAUS consiste en carbure de silicium.

2. Procédé selon la revendication 1, caractérisé en ce que le gaz à désulfurer, mis en contact avec le catalyseur CLAUS, renferme $H_2S$ et $SO_2$ en concentration globale comprise entre 0,01 % et 25 % et de préférence entre 0,02 % et 15 % en volume.

**3.** Procédé selon la revendication 1 ou 2, caractérisé en ce que le rapport molaire $H_2S:SO_2$ dans le gaz à désulfurer a une valeur variant de 0,2:1 à 4:1, ladite valeur étant de préférence égale à environ 2:1.

**4.** Procédé selon l'une des revendications 1 à 3, caractérisé en ce que la phase catalytique du catalyseur à support de carbure de silicium renferme au moins, sous la forme d'oxyde ou de sel ou/et à l'état élémentaire, un métal choisi parmi titane, zirconium, yttrium, lanthane, uranium, plomb, molybdène, fer, cobalt, nickel, calcium, zinc, magnésium, cadmium et lanthanides de numéro atomique allant de 58 à 71.

**5.** Procédé selon la revendication 4, caractérisé en ce que la phase catalytique associée au support de carbure de silicium, comptée en poids de métal, représente 0,1 à 20 %, de préférence 0,2 à 15 % et plus spécialement 0,2 à 10 % du poids du catalyseur.

**6.** Procédé selon l'une des revendications 1 à 5, caractérisé en ce que le catalyseur à support de carbure de silicium présente une surface spécifique, déterminée par la méthode BET d'adsorption d'azote, allant de 2 $m^2$/g à 600 $m^2$/g.

**7.** Procédé selon l'une des revendications 1 à 6, caractérisé en ce que le temps de contact du gaz à désulfurer avec le catalyseur à support de carbure de silicium, déterminé dans les conditions normales de température et de pression, prend des valeurs allant de 0,2 seconde à 20 secondes et de préférence de 0,4 seconde à 12 secondes.

**8.** Procédé selon l'une des revendications 1 à 7, caractérisé en ce que la température de mise en contact du gaz à désulfurer avec le catalyseur à support de carbure de silicium est comprise entre 30°C et 500°C.

**9.** Procédé selon la revendication 8, caractérisé en ce que la température de mise en contact du gaz à désulfurer avec le catalyseur à support de carbure de silicium est comprise entre 180°C et 500°C et plus spécialement entre 190°C et 400°C.

**10.** Procédé selon la revendication 9, caractérisé en ce que le gaz à désulfurer mis en contact avec le catalyseur a support de carbure de silicium renferme des composés organiques du soufre, notamment COS ou/et $CS_2$, en concentration globale n'excédant pas 4 % en volume du gaz à désulfurer, en ce que la phase catalytique dudit catalyseur renferme ou est un promoteur d'hydrolyse desdits composés organiques du soufre et en ce que ladite mise en contact est réalisée à des températures comprises dans l'intervalle 180°C à 500°C et suffisante pour ladite hydrolyse.

**11.** Procédé selon la revendication 8, caractérisé en ce que la température de mise en contact du gaz à désulfurer avec le catalyseur à support de carbure de silicium est comprise dans l'intervalle 30°C à 180°C et plus particulièrement dans l'intervalle 80°C à 160°C, le soufre résultant de la réaction entre $H_2S$ et $SO_2$ se déposant sur le catalyseur.

**12.** Procédé selon la revendication 11, caractérisé en ce que le catalyseur chargé de soufre est soumis périodiquement à une régénération par balayage à l'aide d'un gaz en opérant à des températures comprises entre 200°C et 500°C et de préférence entre 250°C et 450°C pour vaporiser le soufre retenu sur le catalyseur, puis on refroidit le catalyseur régénéré jusqu'à une température inférieure au point de rosée du soufre pour une nouvelle mise en contact avec le gaz à désulfurer, ce refroidissement étant réalisé au moyen d'un gaz ayant une température inférieure à 180°C le gaz de balayage utilisé pour la régénération renfermant éventuellement un composé réducteur comme, par exemple, $H_2$, CO ou $H_2S$, au moins au cours de la phase finale de la régénération.

**13.** Procédé selon la revendication 11 ou 12, caractérisé en ce que le gaz à désulfurer renferme des composes organiques du soufre, notamment COS ou/et $CS_2$, en concentration globale n'excédant pas 4 % en volume et en ce que ledit gaz est soumis à une étape d'hydrolyse catalytique mise en oeuvre à des températures comprises entre 180°C et 500°C et suffisantes pour l'hydrolyse, avant d'être mis en contact avec le catalyseur a support de carbure de silicium opérant à des températures dans l'intervalle 30°C à 180°C le catalyseur d'hydrolyse étant en particulier un catalyseur CLAUS à support de carbure de silicium.

**14.** Procédé selon l'une des revendications 1 à 3, caractérisé en ce que le gaz à désulfurer passe au contact d'une masse catalytique comportant (i) une couche d'attaque du catalyseur CLAUS à support de carbure de silicium, dont la phase catalytique renferme, sous la forme d'oxyde ou de sel et/ou à l'état élémentaire, au moins un métal choisi parmi Fe, Ni, Co, Cu et Zn et (ii) une couche complémentaire d'un catalyseur à base d'alumine promoteur de la réaction de CLAUS ou/et de l'hydrolyse des composés organiques du soufre tels que COS et $CS_2$ en $H_2S$.

**15.** Procédé selon la revendication 14, caractérisé en ce que la mise en contact du gaz à désulfurer avec la masse catalytique est réalisée à des températures comprises entre 180°C et 500°C et plus spécialement entre 190°C et 400°C.

**16.** Procédé selon la revendication 14, caractérisé en ce que la mise en contact du gaz à désulfurer avec la masse catalytique est réalisée à des températures comprises dans l'intervalle 30°C à 180°C et plus particulièrement dans l'intervalle 80°C à 160°C le soufre résultant de la réaction entre $H_2S$ et $SO_2$ se déposant sur le catalyseur.

**17.** Procédé selon l'une des revendications 1 à 16, caractérisé en ce que le catalyseur CLAUS à support de carbure de silicium renferme, en poids, au moins 40% et plus particulièrement au moins 50% de carbure de silicium.

**18.** Procédé selon l'une des revendications 1 à 17, caractérisé en ce que le catalyseur CLAUS à support de carbure de silicium possède une granulométrie comprise entre 0,3 mm et 15 mm et plus particulièrement entre 0,5 mm et 10 mm.

**Claims**

**1.** Process for the catalytic desulphurisation of a gas containing the sulphur compounds $H_2S$ and $SO_2$ with recovery of the compounds in the form of sulphur, in which the gas to be desulphurised is brought into contact with a CLAUS catalyst constituted by a catalytic phase which is capable of promoting the CLAUS reaction between $H_2S$ and $SO_2$ and which is associated with a support, the process being characterised in that the support of the CLAUS catalyst consists of silicon carbide.

**2.** Process according to claim 1, characterised in that the gas to be desulphurised, which is brought into contact with the CLAUS catalyst, contains $H_2S$ and $SO_2$ in a total concentration of between 0.01% and 25% and preferably between 0.02% and 15% by volume.

**3.** Process according to claim 1 or 2, characterised in that the molar ratio $H_2S:SO_2$ in the gas to be desulphurised has a value ranging from 0.2:1 to 4:1, the value preferably being equal to approximately 2:1.

**4.** Process according to any one of claims 1 to 3, characterised in that the catalytic phase of the catalyst having a silicon carbide support contains at least, in the form of oxide or salt and/or in the elemental state, one metal selected from titanium, zirconium, yttrium, lanthanum, uranium, lead, molybdenum, iron, cobalt, nickel, calcium, zinc, magnesium, cadmium and lanthanides having an atomic number of from 58 to 71.

**5.** Process according to claim 4, characterised in that the catalytic phase associated with the silicon carbide support, calculated by weight of metal, represents from 0.1 to 20%, preferably from 0.2 to 15% and more especially from 0.2 to 10% of the weight of the catalyst.

**6.** Process according to any one of claims 1 to 5, characterised in that the catalyst having a silicon carbide support has a specific surface area, determined by the BET nitrogen adsorption method, of from 2 $m^2$/g to 600 $m^2$/g.

**7.** Process according to any one of claims 1 to 6, characterised in that the time for which the gas to be desulphurised is in contact with the catalyst having a silicon carbide support, determined under normal conditions of temperature and pressure, assumes values of from 0.2 second to 20 seconds and preferably from 0.4 second to 12 seconds.

**8.** Process according to any one of claims 1 to 7, characterised in that the temperature at which the gas to be desulphurised is brought into contact with the catalyst having a silicon carbide support is between 30°C and 500°C.

**9.** Process according to claim 8, characterised in that the temperature at which the gas to be desulphurised is brought into contact with the catalyst having a silicon carbide support is between 180°C and 500°C and more especially between 190°C and 400°C.

**10.** Process according to claim 9, characterised in that the gas to be desulphurised, which is brought into contact with the catalyst having a silicon carbide support, contains organic sulphur compounds, especially COS and/or $CS_2$, in a total concentration not exceeding 4% by volume of the gas to be desulphurised, in that the catalytic phase of the catalyst contains or is a promoter of the hydrolysis of the organic sulphur compounds and in that the operation of bringing into contact is effected at temperatures in the range of from 180°C to 500°C and sufficient for said hydrolysis.

11. Process according to claim 8, characterised in that the temperature at which the gas to be desulphurised is brought into contact with the catalyst having a silicon carbide support is in the range of from 30°C to 180°C and more particularly in the range of from 80°C to 160°C, the sulphur resulting from the reaction between $H_2S$ and $SO_2$ being deposited on the catalyst.

12. Process according to claim 11, characterised in that the catalyst charged with sulphur is periodically subjected to regeneration by scavenging with a gas, operating at temperatures of between 200°C and 500°C and preferably between 250°C and 450°C, in order to vaporise the sulphur retained on the catalyst, then the regenerated catalyst is cooled to a temperature lower than the dew point of sulphur for a fresh operation of bringing into contact with the gas to be desulphurised, the cooling being carried out by means of a gas having a temperature lower than 180°C, the scavenging gas used for the regeneration optionally containing a reducing compound, such as, for example, $H_2$, CO or $H_2S$, at least in the course of the final stage of regeneration.

13. Process according to claim 11 or 12, characterised in that the gas to be desulphurised contains organic sulphur compounds, especially COS and/or $CS_2$, in a total concentration not exceeding 4% by volume and in that the gas is subjected to a catalytic hydrolysis step carried out at temperatures of between 180°C and 500°C and sufficient for the hydrolysis, before being brought into contact with the catalyst having a silicon carbide support, operating at temperatures in the range of from 30°C to 180°C, the hydrolysis catalyst being in particular a CLAUS catalyst having a silicon carbide support.

14. Process according to any one of claims 1 to 3, characterised in that the gas to be desulphurised is brought into contact with a catalytic mass comprising (i) an attack layer of the CLAUS catalyst having a silicon carbide support, the catalytic phase of which contains, in the form of oxide or salt and/or in the elemental state, at least one metal selected from Fe, Ni, Co, Cu and Zn and (ii) a complementary layer of an alumina-based catalyst which is a promoter of the CLAUS reaction and/or of the hydrolysis of organic sulphur compounds, such as COS and $CS_2$, to form $H_2S$.

15. Process according to claim 14, characterised in that the operation of bringing the gas to be desulphurised into contact with the catalytic mass is carried out at temperatures between 180°C and 500°C and more especially between 190°C and 400°C.

16. Process according to claim 14, characterised in that the operation of bringing the gas to be desulphurised into contact with the catalytic mass is carried out at temperatures in the range of from 30°C to 180°C and more particularly in the range of from 80°C to 160°C, the sulphur resulting from the reaction between $H_2S$ and $SO_2$ being deposited on the catalyst.

17. Process according to any one of claims 1 to 16, characterised in that the CLAUS catalyst having a silicon carbide support contains, by weight, at least 40% and more particularly at least 50% of silicon carbide.

18. Process according to any one of claims 1 to 17, characterised in that the CLAUS catalyst having a silicon carbide support has a particle size of between 0.3 mm and 15 mm and more particularly between 0.5 mm and 10 mm.

**Patentansprüche**

1. Verfahren zur katalytischen Entschwefelung eines die Schwefelverbindungen $H_2S$ und $SO_2$ enthaltenden Gases unter Gewinnung dieser Verbindungen in Form von Schwefel, bei dem man das zu entschwefelnde Gas mit einem CLAUS-Katalysator in Berührung bringt, der aus einer katalytischen Phase besteht, welche die CLAUS-Reaktion zwischen $H_2S$ und $SO_2$ zu beschleunigen vermag, und mit einem Träger verbunden ist, wobei das Verfahren dadurch **gekennzeichnet** ist, daß der Träger des CLAUS-Katalysators aus Siliciumcarbid besteht.

2. Verfahren nach Anspruch 1, dadurch **gekennzeichnet**, daß das zu entschwefelnde Gas, das mit dem CLAUS-Katalysator in Berührung gebracht wird, $H_2S$ und $SO_2$ in einer Gesamtkonzentration von 0,01 bis 25 Vol.-% und vorzugsweise von 0,02 bis 15 Vol.-% enthält.

3. Verfahren nach Anspruch 1 oder 2, dadurch **gekennzeichnet**, daß das Molarverhältnis $H_2S:SO_2$ im zu entschwefelnden Gas einen Wert von 0,2:1 bis 4:1 aufweist, der vorzugsweise ca. 2:1 beträgt.

4. Verfahren nach einem der Ansprüche 1 bis 3, dadurch **gekennzeichnet**, daß die katalytische Phase des Katalysators mit dem Träger aus Siliciumcarbid wenigstens ein Metall, ausgewählt unter Titan, Zirconium, Yttrium, Lanthan, Uran, Blei, Molybdän, Eisen, Cobalt, Nickel, Calcium, Zink, Magnesium, Cadmium und Lanthaniden mit der Atomnummer 58 bis 71 in Oxid- oder Salzform und/oder in elementarem Zustand enthält.

5. Verfahren nach Anspruch 4, dadurch **gekennzeichnet**, daß die mit dem Träger aus Siliciumcarbid verbundene katalytische Phase, bezogen auf das Gewicht des Metalls, 0,1 bis 20 %, vorzugsweise 0,2 bis 15 % und insbesondere 0,2 bis 10 % ausmacht.

6. Verfahren nach einem der Ansprüche 1 bis 5, dadurch **gekennzeichnet**, daß der Katalysator mit dem Träger aus Siliciumcarbid eine spezifische Oberfläche, ermittelt nach der BET-Methode der Stickstoffadsorption, von 2 $m^2$/g bis 600 $m^2$/g besitzt.

7. Verfahren nach einem der Ansprüche 1 bis 6, dadurch **gekennzeichnet**, daß die Dauer der Kontaktierung des zu entschwefelnden Gases mit dem Katalysator mit dem Träger aus Siliciumcarbid, ermittelt unter Normalbedingungen von Temperatur und Druck, Werte von 0,2 bis 20 sec und vorzugsweise von 0,4 bis 12 sec besitzt.

8. Verfahren nach einem der Ansprüche 1 bis 7, dadurch **gekennzeichnet**, daß die Temperatur der Kontaktierung des zu entschwefelnden Gases mit dem Katalysator mit dem Träger aus Siliciumcarbid 30 bis 500°C beträgt.

9. Verfahren nach Anspruch 8, dadurch **gekennzeichnet**, daß die Temperatur der Kontaktierung des zu entschwefelnden Gases mit dem Katalysator mit dem Träger aus Siliciumcarbid 180 bis 500°C und insbesondere 190 bis 400°C beträgt.

10. Verfahren nach Anspruch 9, dadurch **gekennzeichnet**, daß das zu entschwefelnde Gas, das mit dem Katalysator mit dem Träger aus Siliciumcarbid in Berührung gebracht wird, organische Schwefelverbindungen, insbesondere COS und/oder $CS_2$ in einer Gesamtkonzentration von höchstens 4 %, bezogen auf das Volumen des zu entschwefelnden Gases, enthält, daß die katalytische Phase des Katalysators einen Promotor für die Hydrolyse dieser organischen Schwefelverbindungen enthält oder einen solchen darstellt und daß die Kontaktierung bei Temperaturen in einem Bereich von 180 bis 500°C, der für die Hydrolyse ausreicht, durchgeführt wird.

11. Verfahren nach Anspruch 8, dadurch **gekennzeichnet**, daß die Temperatur der Kontaktierung des zu entschwefelnden Gases mit dem Katalysator mit dem Träger aus Siliciumcarbid in einem Bereich von 30 bis 180°C und insbesondere von 80 bis 160°C liegt, wobei der bei der Reaktion zwischen $H_2S$ und $SO_2$ entstehende Schwefel sich auf dem Katalysator abscheidet.

12. Verfahren nach Anspruch 11, dadurch **gekennzeichnet**, daß der mit Schwefel beladene Katalysator von Zeit zu Zeit durch Spülen mit einem Gas bei Temperaturen von 200 bis 500°C und vorzugsweise von 250 bis 450°C regeneriert wird, um den auf dem Katalysator zurückgehaltenen Schwefel zu verdampfen, und der regenerierte Katalysator dann bis zu einer Temperatur unterhalb des Taupunkts des Schwefels für eine erneute Kontaktierung mit dem zu entschwefelnden Gas abgekühlt wird, wobei die Abkühlung mit Hilfe eines eine Temperatur von unter 180°C aufweisenden Gases durchgeführt wird und wobei das für die Regeneration verwendete Spülgas gegebenenfalls zumindest im Verlauf der Endphase der Regeneration eine reduzierende Verbindung wie z.B. $H_2$, CO oder $H_2S$ enthält.

13. Verfahren nach Anspruch 11 oder 12, dadurch **gekennzeichnet**, daß das zu entschwefelnde Gas organische Schwefelverbindungen, insbesondere COS und/oder $CS_2$, in einer Gesamtkonzentration von höchstens 4 Vol.-% enthält und daß dieses Gas einer Stufe der katalytischen Hydrolyse bei Temperaturen von 180 bis 500°C, die für die Hydrolyse ausreichen, unterworfen wird, bevor es dann mit dem Katalysator mit dem Träger aus Siliciumcarbid bei Temperaturen in einem Bereich von 30 bis 180°C in Berührung gebracht wird, wobei der Hydrolysekatalysator insbesondere ein CLAUS-Katalysator mit einem Träger aus Siliciumcarbid ist.

14. Verfahren nach einem der Ansprüche 1 bis 3, dadurch **gekennzeichnet**, das das zu entschwefelnde Gas mit einer katalytischen Masse in Berührung gebracht wird, die (i) eine Angriffsschicht des CLAUS-Katalysators mit dem Träger aus Siliciumcarbid, dessen katalytische Phase wenigstens ein Metall, ausgewählt unter Fe, Ni, Co, Cu und Zn, in Oxid- oder Salzform und/oder in elementarem Zustand enthält und (ii) eine Zusatzschicht aus einem Katalysator auf Tonerdebasis, der die CLAUS-Reaktion und/oder die Hydrolyse der organischen Schwefelverbindungen wie COS und $CS_2$ zu $H_2S$ beschleunigt, umfaßt.

**15.** Verfahren nach Anspruch 14, dadurch **gekennzeichnet**, daß die Kontaktierung des zu entschwefelnden Gases mit der katalytischen Masse bei Temperaturen von 180 bis 500°C und insbesondere von 190 bis 400°C durchgeführt wird.

**16.** Verfahren nach Anspruch 14, dadurch **gekennzeichnet**, daß die Kontaktierung des zu entschwefelnden Gases mit der katalytischen Masse bei Temperaturen in einem Bereich von 30 bis 180°C und insbesondere von 80 bis 160°C durchgeführt wird, wobei der bei der Reaktion zwischen $H_2S$ und $SO_2$ entstehende Schwefel sich auf dem Katalysator abscheidet.

**17.** Verfahren nach einem der Ansprüche 1 bis 16, dadurch **gekennzeichnet**, daß der CLAUS-Katalysator mit dem Träger aus Siliciumcarbid wenigstens 40 Gew.-% und insbesondere wenigstens 50 Gew.-% Siliciumcarbid enthält.

**18.** Verfahren nach einem der Ansprüche 1 bis 17, dadurch **gekennzeichnet**, daß der CLAUS-Katalysator mit dem Träger aus Siliciumcarbid eine Kornverteilung von 0,3 bis 15 mm und insbesondere von 0,5 bis 10 mm besitzt.